# EUROPEAN PATENT APPLICATION

(11) **EP 0 642 243 A1**
(43) Date of publication of application: **08.03.1995**
(21) Application number: 93114225.1
(22) Date of filing: 04.09.1993
(51) Int. Cl.: H04J 13/00, H04B 7/005

(54) **Rake receiver for CDMA system**

(71) Applicant: ROKE MANOR RESEARCH LIMITED, Romsey, Hampshire, SO51 0ZN (GB)
(72) Inventor: Hulbert, Anthony Peter, Shirley, Southampton SO1 5AN (GB)
(74) Representative: Allen, Derek

(57) **Abstract**

Code Division Multiple Access (CDMA) based on Direct Sequence Spread Spectrum (DSSS) permits good multipath diversity by the use of the so-called rake receiver. When multipath codes are sent over the same link (to increase the transmission rate for that link without altering the basic transmission format) multiple rake receivers would normally be required. This invention involves the rake combining operation prior to code correlation in order to make only a single rake processor necessary. This affords significant savings in complexity.

## Description

This invention relates to radio communication systems, and more especially it relates to 'code division multiple access' (CDMA) systems.

Many CDMA systems are based on "direct sequence spread spectrum" (DSSS), wherein different system users are each assigned a unique spreading code thereby to achieve multiple access. In order to make beneficial use of significant multipath components, DSSS systems may use a so called rake receiver. This involves relatively simple technology which permits multipath propagation to be exploited fully. Essentially, in a rake receiver significant multipath components are each resolved by a separate correlator and combined in some fashion prior to detection. This process allows significant multipath diversity, which is inherent in wideband spread spectrum signals, to be fully exploited. In general rake receivers are much simpler than equalisers, because the signal energy of different paths can be combined without the need for eliminating multipath interference or inter symbol interference. This arises because multipath interference is suppressed by the processing gain associated with the spreading process. However, achieving adequate processing gain whereby multipath interference can be ignored requires significant spreading factors, e.g. gains of 50 or more.

In flexible CDMA systems, it may be necessary to allow some users more capacity than the capacity provided by a single channel running with a normal spreading factor. It is clearly desirable that all transmissions should occupy the full bandwidth from the viewpoint of commonalty of RF hardware and interference spectra. In view of this constraint there are two principle options available to achieve increased capacity.
(a) To increase the transmission rate whilst retaining the same spread bandwidth (reduce the spreading factor); or
(b) To transmit a plurality of different codes over the same link, one code for each channel, whereby the link is afforded increased capacity.

Option (a) cannot in general be considered because a significant reduction in the spreading factor would introduce multipath interference at an unacceptable level. The only viable option therefore, is option (b). This however, with known systems involves the use of a multiplicity of rake receivers one for each code which would introduce undesirable complexity.

The present invention has for an object to provide a radio communication system which uses DSSS, CDMA, and which in operation will support a multiplicity of codes over the same link without substantially increased complexity.

According to the present invention, a CDMA radio communication system using DSSS for channel discrimination wherein a different spreading code is used for each channel, comprises a rake receiver for combining received multipath signals to produce a single combined signal and despreading means responsive to the combined signal for producing output signals one for each channel, a plurality of channels being used for one link.

The despreading means may comprise a correlator.

By the expedient of effecting the combination of multipath signals before correlation is carried out to effect despreading, a considerable saving in complexity can be effected in a system wherein link capacity is increased by the provision of one or more additional channels.

One embodiment of the invention will be now described by way of example only with reference to the accompanying drawings, in which;
FIGURE 1 is a block schematic diagram of a known rake receiver;
FIGURE 2 is a generally schematic block diagram of a twin rake receiver; and,
FIGURE 3 is a generally schematic block diagram of a CDMA, DSSS system.

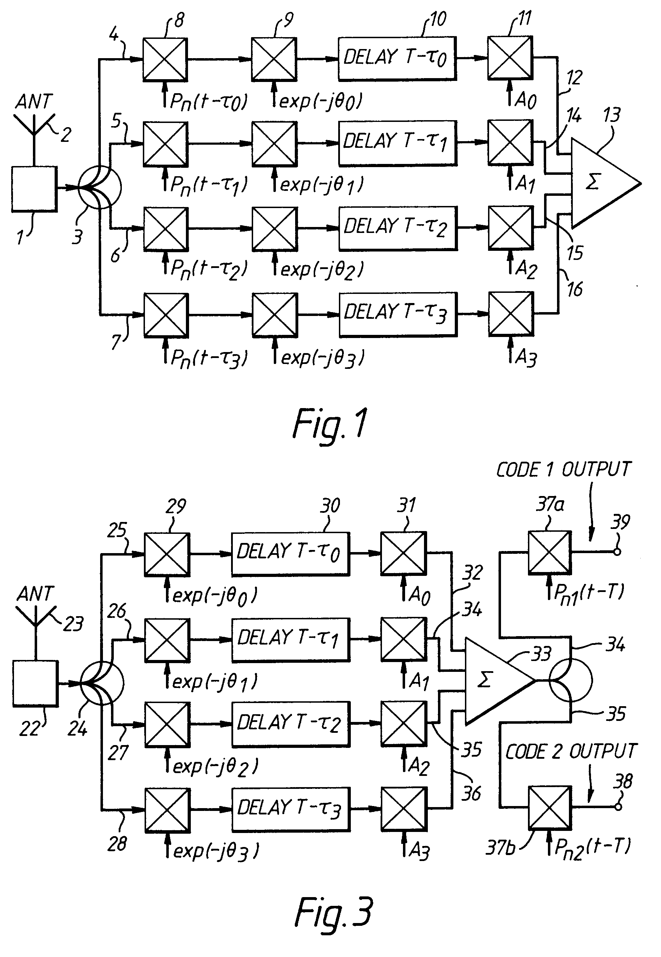

Referring now to Figure 1, a known rake receiver comprises an input amplifier 1, fed from an aerial 2. The input amplifier 1 is arranged to feed a signal splitter 3, which feeds four signal paths 4, 5, 6 and 7. Each of the paths 4, 5, 6 and 7 is similar and thus the path 4 only will be described. The path 4 comprises mixers 8 and 9, arranged to feed a delay device 10 and a further mixer 11, thereby, to provide an output signal on a line 12 for a signal combiner 13. The paths 5, 6 and 7 similarly provide output signals on lines 14, 15 and 16 respectively for the signal combiner 13. In operation of the rake receiver, the mixers in each path, such as the mixers 8, 9 and 11 in path 4 and the delay devices such as the delay device 10 in path 4, are fed/controlled such that multipath signals appear on the lines 12, 14, 15 and 16 suitably modified so that they can be additively combined by the signal combiner 13. The values of the parameters T, ϑ and A, as shown in the drawing, must clearly be set to achieve this, and the standard approach to effect this is to transmit a pilot sequence of known data. This can either be time interleaved with transmitted data or sent simultaneously using a different code. As an example, the case of a continuous pilot signal which is transmitted over the data will be assumed. Determination of the parameters T, ϑ and A is achieved by assigning correlators to the pilot sequence under instruction from a search correlator, the search correlator scans the period of time uncertainty (delay uncertainty plus delay spread) and identifies those peaks in energy which correspond to the significant multipath components. Correlators are set up with code phases according to the code phases applying on the search correlator when the multipath components were found. The phase of each path can be derived by averaging the phase of the output of a complex correlator. Similarly the amplitude is found by averaging the absolute value of the output of the complex correlator.

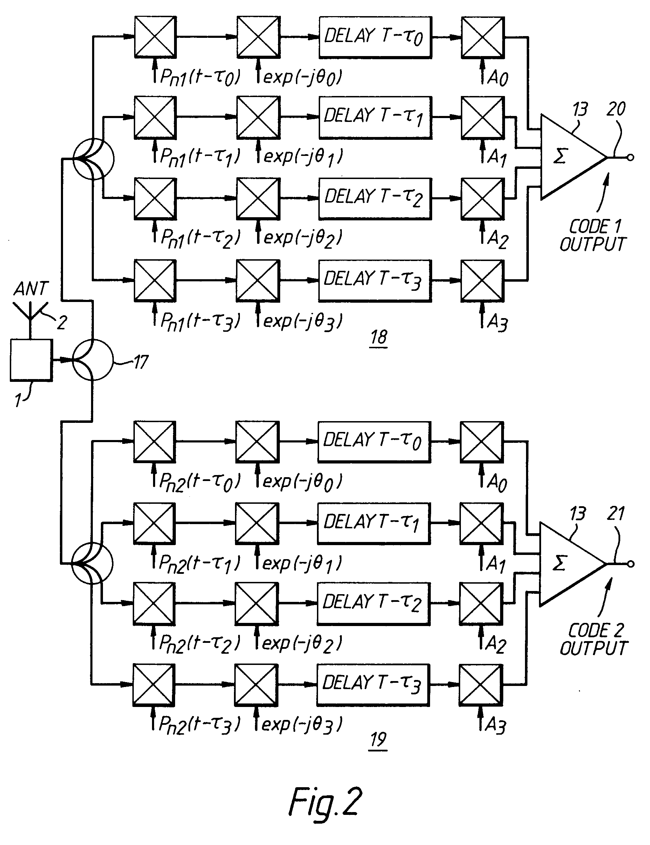

The foregoing techniques are well understood by those skilled in the art and will not be further described herein. It will be apparent, however, that for two codes in one link, a twin rake receiver would normally be required using known technology as shown in Figure 2, wherein parts corresponding to Figure 1 bear the same numerical designations. Thus, it will be apparent that signals from the amplifier 1 are fed to a signal splitter 17, and thence to two rake receivers 18 and 19, each of which corresponds to the arrangement as hereinbefore described with reference to Figure 1, thereby to provide two output signals on lines 20 and 21, each of which corresponds to a different unique channel. It will be clear that this type of combining requires considerable complexity.

In order to avoid the aforesaid complexity a precombiner rake system is proposed, as hereinafter described with reference to Figure 3.

Referring now to Figure 3, a precombining rake comprises an input amplifier 22, fed from an aerial antenna 23. The amplifier 22 is arranged to feed a signal splitter 24, which feeds lines 25, 26, 27 and 28 in parallel. The paths fed from the lines 25 to 28 are substantially similar and so path 25 only will be described. Path 25 comprises a mixer 29, a delay device 30, and a further mixer 31, serially coupled and providing an output signal on a line 32 for a signal combiner 33. In a similar manner the lines 26, 27 and 28 provide output signals on lines 34, 35 and 36, which feed the signal combiner 33. Parameters, as shown in the drawing, appertaining to the mixers 29 and 31 and the delay device 30, are computed as hereinbefore described with reference to Figure 1, whereby summation of multipath signals is effected in the signal combiner 33. Thereafter, however, signals are fed via lines 34 and 35 to correlators 37a and 37b respectively, thereby to provide output signals on lines 38 and 39 respectively which correspond to different signal channels. It will be appreciated that one correlator, which serves to correlate the receive signal against predetermined sync sequences for despreading purposes will be required for each signal channel. It will also be appreciated that the complexity of the precombining rake arrangement, just before described with reference to Figure 3, is small compared with an alternative known system as described with reference to Figure 2, and that by using a system of this kind several channels can be assigned to one link thereby to increase the link capacity.

## Claims

1. A CDMA radio communication system using DSSS for channel discrimination wherein a different spreading code is used for each channel, comprising a rake receiver for combining received multipath signals to produce a single combined signal and despreading means responsive to the combined signal for producing output signals one for each channel, a plurality of channels being used for one link.

2. A system as claimed in claim 1, wherein the despreading means comprises a correlator.
